# EUROPÄISCHE PATENTSCHRIFT

(11) **EP 3 120 085 B1**
(45) Veröffentlichungstag und Bekanntmachung des Hinweises auf die Patenterteilung: **11.05.2022**
(21) Anmeldenummer: 15706174.8
(22) Anmeldetag: 10.02.2015
(51) Int. Cl.: F24F 5/00, F24F 12/00, F28D 20/00, F24F 13/20

(54) **LÜFTUNGSVORRICHTUNG**
VENTILATING DEVICE
DISPOSITIF DE VENTILATION

(30) Priorität: 18.03.2014 DE 102014003753
(43) Veröffentlichungstag der Anmeldung: 25.01.2017
(73) Patentinhaber: Siegenia-Aubi KG, 57234 Wilnsdorf (DE)
(72) Erfinder: BECKER, Christoph, 57234 Wilnsdorf (DE); SCHROER, Friedhelm, 57299 Burbach (DE); SASSMANNSHAUSEN, Jürgen, 57271 Hilchenbach (DE); ZÖLLER, Martin, 57074 Siegen (DE)
(86) Internationale Anmeldenummer: PCT/EP2015/052707
(87) Internationale Veröffentlichungsnummer: WO 2015/139885

(56) Entgegenhaltungen:
- EP-A2- 0 024 269
- EP-A2- 2 660 525
- WO-A1-03/098120
- DE-A1- 3 602 120

## Beschreibung

Die Erfindung betrifft eine Lüftungsvorrichtung zum gleichzeitigen Be- und Entlüften von mindestens einem Raum. Insbesondere bezieht sich die Erfindung dabei auf eine Lüftungsvorrichtung mit einer Wärmespeichereinheit aus dem Entlüftungs- Medienstrom zur Wärmeübertragung auf den Belüftungs- Medienstrom, mit einer Verschluss- und Öffnungseinrichtung zur Steuerung der Luftströmungswege, wobei in beiden Luftströmungswegen Filterelemente vorgesehen sind.

Lüftungsvorrichtungen dieser Art sind bereit bekannt geworden durch die EP 0855560 B1.

Diese Lüftungsvorrichtung ist ebenfalls zum gleichzeitigen Be- und Entlüften von Räumen geeignet, und weist einen Kreuzstromwärmetauscher zur Wärmerückgewinnung aus einem Entlüftungs-Medienstrom auf. Außerdem besteht die Lüftungsvorrichtung aus einem Gehäuse, das - beispielsweise rauminnenseitig- an oder in einer Gebäudewand angeordnet ist, sowie an je einen zur Außenluft führenden Lüftungskanal für den Belüftungs-Medienstrom und den Entlüftungs-Medienstrom anschließbar ist. Dazu sind innerhalb des Gehäuses zwei voneinander getrennte Strömungswege ausgebildet, wobei in beiden Strömungswegen Filterelemente vorgesehen sind. Die bekannte Lüftungsvorrichtung ist konstruktiv so gestaltet, dass die Luftförderrichtung des Be- und Entlüftungs-Medienstrom den Wärmetauscher kreuzend durchströmen. Das Kreuzstromprinzip erfüllt den Zweck der Wärmerückgewinnung, wirkt sich aber nachteilig auf den Wärmerückgewinnungsgrad aus.

Die Gestaltung der Strömungskanäle und das kreuzende Durchströmen des Be- und Entlüftungs-Medienstrom durch den Wärmetauscher bewirkt einen Druckverlust, der durch höhere Leistung und damit durch mehr Betriebsenergie kompensiert werden kann. Jedoch entsteht dadurch ein Mehrbedarf an Energiekosten und an Auslastung der Ventilatoren. Zudem führt eine höhere Betriebsintensität der Ventilatoren zu höheren Betriebsgeräuschen.

Des Weiteren ist aus dem Stand der Technik ein lufttechnisches Gerät nach DE 202012010671 U1 bekannt geworden, welches zur Be- und Entlüftung von mindestens einem Raum eines Gebäudes vorgesehen ist. Das lufttechnische Gerät weist dazu zwei Luftkanäle auf, die jeweils eingangsseitig sowie ausgangsseitig je eine Kanalöffnung aufweisen und die jeweils zwischen den zugehörigen Kanalöffnungen durch eine, eine Luftförderrichtung aufweisende Luftfördereinrichtung strömungstechnisch miteinander verbunden sind. Mit einer Verschlusseinrichtung, die in einer ersten Betriebsart zur Ausbildung eines über die Luftfördereinrichtung führenden ersten Luftwegs die eine Kanalöffnung des einen, ersten Luftkanals mit der einen Kanalöffnung des anderen, zweiten Luftkanals strömungstechnisch verbindet, und die in einer zweiten Betriebsart zur Ausbildung eines über die Luftfördereinrichtung führenden zweiten Luftwegs die andere Kanalöffnung des ersten Luftkanals mit der anderen Kanalöffnung des zweiten Luftkanals strömungstechnisch verbindet. Die bekannte Lüftungsvorrichtung ist konstruktiv so gestaltet, dass die Verschlusseinrichtung aus einer Lüftungsklappe besteht, durch welche die jeweiligen Betriebsarten mit einer Drehbewegung gesteuert werden. Der zeitliche Ablauf zur Verstellung der Verschlusseinrichtung über die Lüftungsklappe in die gewählte Betriebsart verhält sich zyklisch, so dass ein Luftaustausch in diesem Zeitraum unterbrochen ist, was sich nachteilig auf den Luftaustausch und durch das immer wieder wechselnde Geräusch störend auf im Raum befindliche Personen auswirken kann. Außerdem wird der Wärmetauscher und auch das Filterelement wechselseitig durchströmt, wobei durch hälftiges Aufteilen der Luftdurchströmung des Be- und Entlüftungs- Medienstroms durch den Wärmetauscher hindurch, auch nur die Hälfte der verfügbaren Speicherkapazität in Benutzung ist, was sich nachteilig auf den Wärmerückgewinnungsgrad auswirkt. Weiterhin hat es sich als Nachteilig herausgestellt, dass das Filterelement wechselseitig von dem Be- und Entlüftungs- Medienstrom durchströmt wird. Bereits durch den Entlüftungs- Medienstrom aus dem Raum abgesaugte Schmutzpartikel werden wieder durch den Belüftungs- Medienstrom in den Raum eingeleitet.

Weiter wird verwiesen auf die DE 36 02 120 A1, aufweisend Luftförderrichtung mit kontinuierlich betriebenen Ventilatoren für den Belüftungs- und den Entlüftungsmedienstrom. Dabei sind schwenkbare Klappen fest auf Schwenkwellen angeordnet, die über einen gemeinsamen Antrieb betätigbar sind. Die schwenkbaren Klappen sind weiter in einer Reihe jeweils im gleichen Abstand nebeneinander angeordnet, so dass der Abstand der schwenkbaren Wellen der beiden sich kreuzenden Reihen gleich ist, dass eine mittlere schwenkbare Klappe mit ihrer Schwenkwelle im Schnittpunkt der beiden Reihen liegt.

Die konstruktive Ausgestaltung der funktionell angeordneten Bauteile, erweist sich als kompakt.

Jedoch ist die gewählte Anordnung der Wärmetauscher zu den Ventilatoren bezüglich einer vollen Auslastung der Luftdurchströmung durch die Wärmetauscher ungünstig, da je nach Schaltfolge oder Wechsel der Luftförderrichtung immer ein Wärmetauscher erst nach einem Ventilator durchströmt wird, so dass dieser Wärmetauscher nicht vollflächig durchströmt seine Kapazität ausnutzen kann, was sich damit nachteilig auf den Wärmerückgewinnungsgrad auswirkt. Selbst bei einer Veränderung der Anordnung der funktionellen Bauteile, lässt sich dieser Nachteil nicht beheben.

Der Erfindung liegt nun die Aufgabe zugrunde, eine Lüftungsvorrichtung der eingangs erwähnten Art zu schaffen, die die Nachteile des Standes der Technik überwindet. Gleichzeitig soll mit der Lüftungsvorrichtung eine hohe Luftleistung, bei guter Schalldämmung, geringem Eigengeräusch und hohem Wärmerückgewinnungsgrad erreicht werden, sowie den Anforderungen der Druckstabilität nach DIN EN 13141-8 gerecht werden.

Zur Lösung dieses Problems wird erfindungsgemäß eine Lüftungsvorrichtung mit den Merkmalen von Anspruch 1 vorgeschlagen. Dazu ist vorgesehen, dass die Luftfördereinrichtung aus einem Ventilator für den Belüftungs-Medienstrom und aus einem Ventilator für den Entlüftungs- Medienstrom bestehend, nahezu kontinuierlich in einer Luftförderrichtung betrieben wird, wobei die Wärmespeichereinheit zwei Wärmespeicher aufweist, wobei den Wärmespeichern an den jeweiligen Ein- und Austrittsöffnungen des Be- und Entlüftungs- Medienstroms zum wechselseitigen und gegenläufigen Luftdurchströmen eine Verschluss- und Öffnungseinrichtung vorgeschaltet ist, und wobei der erste Wärmespeicher und der zweite Wärmespeicher saugseitig zu den Ventilatoren installiert sind. Somit verteilt sich der aus der Abluft von der Rauminnenseite erwärmte Entlüftungs- Medienstrom in dem gesamten Bereich des Wärmespeichers während des Durchströmens.

Dadurch wird erreicht, dass der aus der Rauminnenseite abgeführte Entlüftungs- Medienstrom und der in den Innenraum zugeführte Belüftungs- Medienstrom einen gleichbleibenden Volumenstrom behalten mit Einhaltung der Druckstabilität nach DIN EN 13141-8. Aufgrund der Anordnung von zwei Wärmespeichern, die wiederum durch die vorgeschalteten Verschluss- und Öffnungseinrichtungen getrennt voneinander schaltbar sind, kann ein gleichbleibend konstant anhaltender Be- und Entlüftungs- Medienstrom bei gleicher Leistung der Ventilatoren eingehalten werden.

Zur Effizienzsteigerung und Vollauslastung der Wärmerückgewinnungseinrichtung, werden erfindungsgemäß die mindestens zwei angeordneten Wärmespeicher im Betriebszustand kontinuierlich vollflächig an den jeweiligen Ein- und Austrittsöffnungen von dem Be- und/ oder Entlüftungs- Medienstrom wechselweise durchströmt. Somit kann sich der aus der Abluft von der Rauminnenseite erwärmte Entlüftungs- Medienstrom in dem gesamten Bereich des Wärmespeichers während des Durchströmens verteilen und die Wärme speichern und entsprechend mit einem Wechsel der Luftströmungsrichtung durch die Verschluss- und Öffnungseinrichtungen die gespeicherte Wärme ebenfalls durch den gesamten Querschnitt des Wärmespeichers an die gegenläufige Luftdurchströmung des Belüftungs-Medienstrom wieder abgeben.

Die Wärmespeicher nehmen bei konstanter Luftdurchströmung, wie das die Ausgestaltung der Lüftungsvorrichtung vorgibt, die Temperatur der Luft an. Wird beispielsweise von der Außenseite der kühlere Belüftungs- Medienstrom eingesogen, kühlt sich der Wärmespeicher ab. Mit anschließendem Durchströmen des Entlüftungs- Medienstroms von der Rauminnenseite nach draußen, kühlt der Wärmespeicher den Entlüftungs- Medienstrom ab und erwärmt diese jedoch gleichzeitig. Bei abermaliger Umkehr der Luftdurchströmungsrichtung wirkt der Wärmespeicher dann wie ein Wärmetauscher, erwärmt die eingesogene Luft und kühlt sich dabei wieder selbst ab. Gut geeignet für einen solchen Prozess ist ein Wärmespeicher, der aus einer keramischen oder einer metallischen Speichermasse besteht und mehrere Kanäle umfasst. Die keramische oder metallische Speichermasse ist neben der hohen Wärmekapazität auch resistent gegen Keimbildung, da die Wärmespeicher der Lüftungsvorrichtung durch die regelmäßigen und übergangslosen Intervalle des Be- und Entlüftungs- Medienstroms mögliche Feuchtigkeitsbildung durch Erwärmung trocknen. Vorzugsweise sind die Wärmespeicher gleich ausgebildet, was eine Verwechslung bei einer Montage vorbeugt und was sich auf das Gleichgewichtsverhältnis für die Funktionalität während des Betriebszustandes der Lüftungsvorrichtung positiv auswirkt.

Durch die voran beschriebene Ausgestaltung der Lüftungsvorrichtung mit den Wärmespeichern, wird bei einem maximalen Volumenstrom von 70% ein Wärmerückgewinnungsgrad größer 80% erreicht.

Eine weitere vorteilhafte Ausgestaltung sieht vor, dass zumindest ein Filterelement von dem Belüftungs- Medienstrom und mindestens ein vorzugsweise zwei Filterelemente von dem Entlüftungs- Medienstrom, in einer gleichbleibenden Luftförderrichtung durchströmt werden. Dabei ist das Filterelement den Einrichtungen zur Wärmerückgewinnung vorgeordnet, so dass in die Rauminnenseite eingeführte Luft von schwebenden Schmutzpartikeln befreit ist. Ebenso sind die Filterelemente im Entlüftungs- Medienstrom der Einrichtung der Wärmerückgewinnung vorgelagert. Das Filterelement bzw. die Filterelemente wirken einer Verschmutzung der Einrichtung der Wärmerückgewinnung auch der abgesaugten Luft von der Rauminnenseite entgegen.

Die Filterelemente sind im Gehäuse an den jeweiligen Lufteintrittsöffnungen des Be- und Entlüftungs- Medienstroms angeordnet. Dadurch wird erreicht, dass sowohl in den Filterelementen als auch in den Wärmespeichern eine Strömung vorliegt, die deren vollflächige Luftdurchströmung gewährleistet. Die Anordnung der Filterelemente begünstigt auch die größtmögliche Entfernung zu den Ventilatoren, woraus neben den günstigen Luftdurchströmungsverhältnissen auch eine längere Verweilzeit der Luftdurchströmung mit der damit verbunden Erwärmung des zugeführten Belüftungs- Medienstroms durch das gesamte Gehäuse resultiert. Alle luftdurchströmenden Bauteile wie die Luftströmungskanäle, die Wärmespeichereinheit, die Luftfördereinrichtung und auch die Verschluss- und Öffnungseinrichtung, sind durch die vorgeschalteten Filterelemente vor äußeren Einflüssen beispielsweise Schmutzpartikel der Luft und / oder Pollen geschützt.

Zur einfachen Gestaltung und Verbindung bei der Montage, ist die Lüftungsvorrichtung zur lotrechten Mittelebene und in Richtung der Luftdurchströmung der Wärmespeicher spiegelbildlich ausgebildet. Durch die symmetrische Ausgestaltung werden nicht nur beidseitig gleiche Bauteile verwendet, sondern es ergeben sich durch die gleiche Anordnung der Bauteile auch die gleichen Luftströmungsverhältnisse bei gleicher Wärmerückgewinnung. Durch Schaltung der Verschluss- und Öffnungseinrichtung befindet sich beispielsweise die erste Hälfte mit dem angeordneten ersten Wärmespeicher in dem Modus des Belüftungs- Medienstroms, wobei sich der zweite Wärmespeicher auf der anderen angeordneten Hälfte zur gleichen Zeit in dem Modus des Entlüftungs- Medienstroms aufhält. Die Modi wechseln nach jedem Schaltvorgang der Verschluss- und Öffnungseinrichtung von einer Hälfte zur anderen Hälfte, sodass die angeordneten Wärmespeicher wechselseitig durchströmt werden.

Zur Erreichung eines geräuschlosen und nahezu übergangslosen Umschalten von dem Belüftungs- Medienstrom in den Entlüftungs- Medienstrom, weist die Verschluss- und Öffnungseinrichtung ein Schließorgan auf, welches vorzugsweise von einer Lüftungsklappe und/ oder von einem Schieber gebildet ist.

Eine weiteres vorteilhaftes Merkmale der Verschluss- und Öffnungseinrichtung sieht vor, dass die Lüftungsklappen zur Erzeugung einer nahezu kontinuierlichen Luftführung entsprechend schnell schließend und/ oder entsprechend schnell öffnend arbeitend ausgebildet sind. Dazu sind die Endlagewinkelstellungen der Lüftungsklappen, die gleichzeitig den Verschluss- oder einen Öffnungszustand der Luftströmungskanäle bilden, und damit den Be- und Entlüftungs-Medienstrom beeinflussen, in einem spitzen Winkel zumindest aber kleiner 90° voneinander beabstandet.

Kostengünstig und einfach in der Montage erweist sich die Lüftungsvorrichtung dadurch, dass die Verschluss- und Öffnungseinrichtung ohne bauliche Veränderung an vier Positionen seinen Einsatz findet. Als einzige Unterscheidung ist die Schaltstellung der aufweisenden Lüftungsklappen anzusehen, wobei sich die in einem ersten Betriebszustand auf der zur Mittelebene geteilten einen Hälfte der Lüftungsvorrichtung angeordneten Lüftungsklappen in der Endlagestellung des geöffneten Belüftungs-Medienstroms befinden und den einen Wärmespeicher durchströmen und die auf der anderen Hälfte der Lüftungsvorrichtung angeordneten Lüftungsklappen in der Endlagestellung des geöffneten Entlüftungs- Medienstroms befinden und den anderen Wärmespeicher durchströmen. Mit Wechsel der Endlagestellungen der Lüftungsklappen stellt sich ein zweiter Betriebszustand ein, so dass die jeweiligen Wärmespeicher von der Gegenrichtung durchströmt werden, bei gleichzeitigem Richtungswechsel des Be- und Entlüftungs- Medienstroms.

Um die Wirkung der Schließung der Luftströmungskanäle des Belüftungs- Medienstroms und des Entlüftungs- Medienstroms zu erhöhen bei gleichzeitiger Entlastung der Kraftbeaufschlagung auf die Lüftungsklappen und/ oder die Schieber, sind Lüftungsklappen mit einer Dichtung beidseitig umrandet angeordnet. Dabei handelt es sich vorzugsweise um eine aus einem Schaum- / Kautschuk- / oder Gummimaterial aufweisende Dichtungslippe, die mit dem Luftströmungskanal im geschlossenen Zustand eine Wirkverbindung eingeht.

Zum Betätigen der Lüftungsklappen weist die Verschluss- und Öffnungseinrichtung vorzugsweise einen elektromotorischen Antrieb auf. In vorteilhafter Weise lassen sich die Lüftungsklappen über den Antrieb jeweils getrennt voneinander ansteuern, so dass der Betriebszustand der Lüftungsvorrichtung zum Be- und Entlüften oder beispielweise zum kompletten Verschließen über ein Steuergerät angewählt werden kann.

Nach einer Weiterbildung der Erfindung ist vorgesehen, dass die während des Betriebszustandes kontinuierlich arbeitenden Ventilatoren der Luftfördereinrichtung Radialventilatoren sind, die während des Betriebszustandes keine Veränderung der Drehrichtung vornehmen. Zur Erreichung eines Nennvolumenstroms von 60 m³/h, einer hohen Druckstabilität und einem möglichst gleichbleibenden Volumenstrom bei einem Druck von +/- 20 Pa, der wiederrum um maximal 30% variieren darf, ist der Einsatz der Radialventilatoren bevorzugt anzuwenden. Der kontinuierliche Betrieb ohne Drehrichtungswechsel führt außerdem zu relativ niedrigen Betriebskosten und schont die Luftfördereinrichtung, so dass diese verschleißarm und nahezu geräuschlos arbeitet.

An der lotrechten Mittelebene orientiert sich zugleich die Anordnung der Ventilatoren, wobei die Ventilatoren auf der Mittelebene versetzt zueinander angeordnet sind. Dadurch bietet sich ausreichend Platz für eine einfache Montage und für ausreichend Dämmmaterial zur Dämmung der Ventilatoren für ein niedriges Eigengeräusch und langer geführter Luftströmungskanäle mit aerodynamischem Verlauf zur schallabsorbierenden Wirkung. Mit Beibehaltung des symmetrischen Aufbaus der Lüftungsvorrichtung auf der Mittelebene und durch die Anordnung des einen Ventilators an der unteren Begrenzungswand und des anderen Ventilators an der oberen Begrenzungswand des Gehäuses, ergibt sich jeweils eine größtmögliche Entfernung zu den Filterelementen und zu den Wärmespeichern. Daraus resultiert neben günstigen Luftdurchströmungsverhältnissen auch eine längere Verweilzeit der Luftdurchströmung mit der damit verbundenen besseren Erwärmung des zugeführten Belüftungs- Medienstroms durch das ganze Gehäuse.

In vorteilhafter Weise besteht das Gehäuse der Lüftungsvorrichtung aus einer Gehäuseschale und einem Gehäusedeckel, welche form- und / oder kraftschlüssig miteinander verbindbar sind. Alle Funktionsbauteile lassen sich einfach und schnell im geöffneten Zustand des von der Gehäuseschale entfernten Gehäusedeckels lagefixiert montieren und form- und/ oder kraftschlüssig befestigen. Die integrierten Funktionsbauteile in der Gehäuseschale sind mit Abdeckung des Gehäusedeckels völlig verdeckt angeordnet. Mögliche Verschmutzungen, die zu einer Beeinträchtigung der Lebensdauer der Lüftungsvorrichtung beitragen können, werden durch die dichtende Verbindung der Gehäuseschale mit dem Gehäusedeckel ausgeschlossen. Vereinfacht lassen sich auch die Filterelemente für eine mögliche Wartung mit Lösen einer form- und / oder kraftschlüssigen Verbindung des Gehäusedeckels ausbauen und gegebenenfalls reinigen.

Zur Erzielung einer erhöhten Schalldämmung und einer Ausnutzung des vorhandenen Raumbedarfs für eine größtmögliche Auslastung der Funktionsbauteile, weist die Gehäuseschale an der zur Gebäudewand anliegenden Gehäusewand einen ersten Ausschnitt für den Belüftungs- Medienstrom und einen zweiten Ausschnitt für den Entlüftungs-Medienstrom auf.

Bevorzugt besitzen die Ausschnitte einen rohrförmigen Querschnitt, da sich die in der Gebäudewand befindlichen Durchbrüche durch eine Bohrung vereinfacht herstellen lassen und eine Verbindung von der Gebäudeaußenseite zur Lüftungsvorrichtung über jeweils rohrförmige Lüftungskanäle auf einfache Weise ermöglichen. Begünstigt wird die Montage und die Herstellung der Durchbrüche dadurch, dass die Ausschnitte versetzt zueinander auf der lotrechten Mittelebene der Lüftungsvorrichtung angeordnet sind.

Zudem betrifft die Erfindung ein Verfahren zum Betrieb einer Lüftungsvorrichtung zum Be- und Entlüften eines Raumes eines Gebäudes, bei dem im Be- und Entlüftungs- Medienstrom Ventilatoren und Wärmespeicher vorgesehen sind, wobei bei der durch eine wechselnde Durchströmung der Wärmespeicher ein Temperaturaustausch des Be- und Entlüftungs-Medienstroms erreicht wird, wobei die wechselnde Durchströmung der Wärmespeicher durch einen Tausch der Lüftungswege des Be- und Entlüftungs- Medienstroms unter Beibehaltung der Förderrichtung der Ventilatoren erreicht wird, wobei die Wärmespeicher saugseitig zu den Ventilatoren angeordnet im Betriebszustand kontinuierlich vollflächig an den jeweiligen En- und Austrittsöffnungen von dem Be- und/oder Entlüftungs-Medienstrom Medienstrom durchströmt werden.

Weitere vorteilhafte Ausgestaltungen ergeben sich aus den Zeichnungen. Es zeigt:
- Fig. 1: eine perspektivische Darstellung der Lüftungsvorrichtung bei geöffnetem Gehäuse mit Darstellung der Vorderansicht und der Seitenansicht,
- Fig. 2: eine perspektivische Darstellung der Lüftungsvorrichtung bei geöffnetem Gehäuse mit Darstellung der Vorderansicht und der Draufsicht,
- Fig. 3: eine Vorderansicht, eine Seitenansicht, eine Draufsicht und eine Unteransicht der Lüftungsvorrichtung nach Fig. 1,
- Fig. 4: eine Unteransicht und eine Schnittdarstellung der Unteransicht in einer Draufsicht,
- Fig. 5: eine Schnittdarstellung einer Draufsicht und eine Schnittdarstellung der Seitenansicht der Lüftungsvorrichtung mit einem Verlauf einer Luftdurchströmung eines Belüftungs- Medienstroms durch einen ersten Wärmespeicher,
- Fig. 6: eine Schnittdarstellung einer Draufsicht und eine Schnittdarstellung der Seitenansicht der Lüftungsvorrichtung mit einem Verlauf einer Luftdurchströmung eines Belüftungs- Medienstroms durch einen zweiten Wärmespeicher,
- Fig. 7: eine Schnittdarstellung einer Draufsicht und eine Schnittdarstellung der Seitenansicht der Lüftungsvorrichtung mit einem Verlauf einer Luftdurchströmung eines Entlüftungs- Medienstroms durch einen ersten Wärmespeicher,
- Fig. 8: eine Schnittdarstellung einer Draufsicht und eine Schnittdarstellung der Seitenansicht der Lüftungsvorrichtung mit einem Verlauf einer Luftdurchströmung eines Entlüftungs- Medienstroms durch einen zweiten Wärmespeicher und
- Fig. 9: eine perspektivische Darstellung, eine Vorderansicht und ein Ausschnitt mit einer Schnittdarstellung einer Lüftungsklappe der Lüftungsvorrichtung nach Fig. 5 bis Fig. 8.

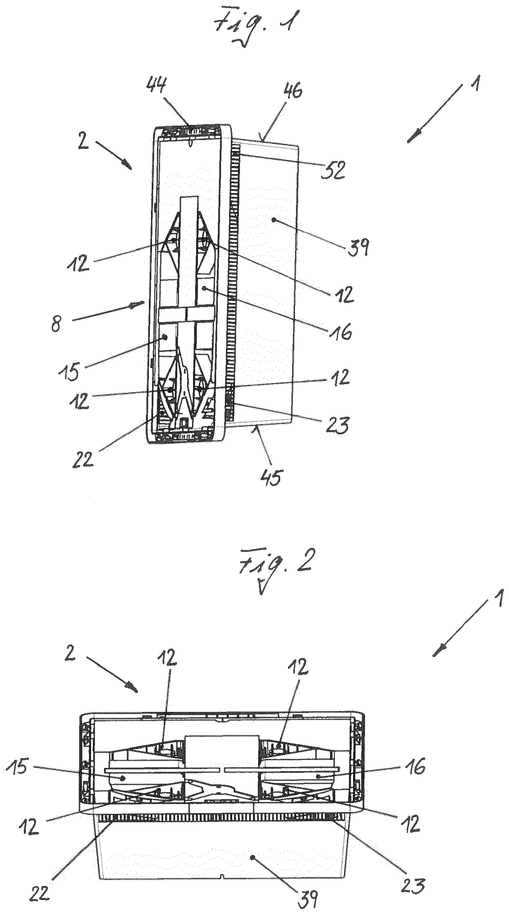

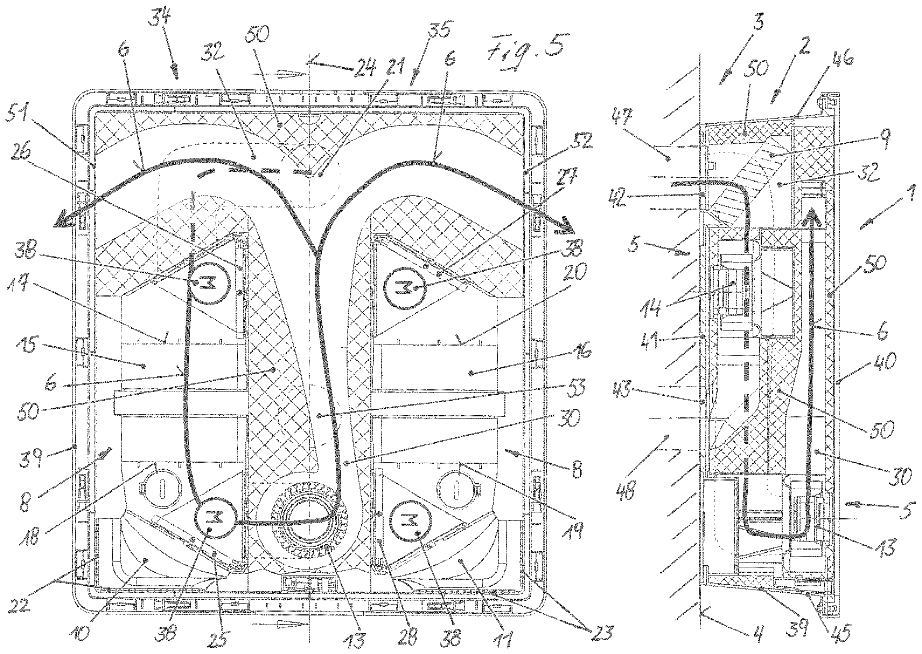

Fig. 1 und Fig. 2 der Zeichnung zeigen eine perspektivische Darstellung der Lüftungsvorrichtung 1 bei geöffnetem Gehäuse 2 zum gleichzeitigen Be- und Entlüften von Räumen. Die Lüftungsvorrichtung 1 lässt sich nach Fig. 5 bis Fig. 8 vorzugsweise von der Rauminnenseite 3, an oder in eine Gebäudewand 4 befestigen, die insbesondere als Fassadenwand ausgebildet sein kann. Dabei weist die Gebäudewand 4 nach außen einen Durchbruch 47 für einen Belüftungs- Medienstrom 6 und einen Durchbruch 48 für einen Entlüftungs- Medienstrom 7 auf.

Gemäß der Fig. 5 bis Fig. 8 weist die Lüftungsvorrichtung 1 eine Luftfördereinrichtung 5 auf, welche aus einem ersten Ventilator 13 für den Belüftungs- Medienstrom 6 besteht und im Betriebszustand kontinuierlich Luft von der Gebäudeaußenseite in die Rauminnenseite 3 befördert und aus einem zweiten Ventilator 14 für den Entlüftungs- Medienstrom 7 besteht und kontinuierlich Luft aus der Rauminnenseite 3 zur Gebäudeaußenseite hinausführt. Außerdem ist eine Wärmespeichereinheit 8 aus dem Entlüftungs- Medienstrom 7 zur Wärmeübertragung auf den Belüftungs- Medienstrom 6 vorgesehen, wobei beide Luftströmungswege Filterelemente 9, 10, 11 aufweisen. Dazu steuert eine Verschluss- und Öffnungseinrichtung 12 die Luftströmungswege.

Die Wärmespeichereinheit 8 weist nach Fig. 5 bis Fig. 8 zwei Wärmespeicher 15, 16 auf, wobei den Wärmespeichern 15, 16 an den jeweiligen Ein- und Austrittsöffnungen 17, 18 und 19, 20 des Be- und Entlüftungs- Medienstroms 6, 7 zum wechselseitigen und gegenläufigen Luftdurchströmen eine Verschluss- und Öffnungseinrichtung 12 vorgeschaltet ist.

Der aus der Rauminnenseite 3 abgeführte Entlüftungs- Medienstrom 7 und der in den Innenraum 3 zugeführte Belüftungs- Medienstrom 6 behalten dabei gleichbleibend einen Volumenstrom und eine Druckstabilität bei. Beide Wärmespeicher 15, 16 sind wiederum durch die vorgeschalteten Verschluss- und Öffnungseinrichtungen 12 getrennt voneinander schaltbar. Dadurch kann ein gleichbleibend konstant anhaltender Be- und Entlüftungs- Medienstrom 6, 7 bei gleicher Leistung der Ventilatoren 13, 14 eingehalten werden.

Zur Erreichung einer Effizienzsteigerung und Vollauslastung der Wärmerückgewinnung, werden in einer bevorzugten Ausgestaltung gemäß der Lüftungsvorrichtung 1 die mindestens zwei angeordneten Wärmespeicher 15, 16 im Betriebszustand kontinuierlich vollflächig an den jeweiligen Ein- und Austrittsöffnungen 17,18 und 19, 20 von dem Be- und/ oder Entlüftungs-Medienstrom 6, 7 wechselweise durchströmt (hierzu Fig. 5 bis Fig. 8). Dies geschieht durch die saugseitig installierten Wärmespeicher 15, 16. Somit verteilt sich der aus der Abluft von der Rauminnenseite 3 erwärmte Entlüftungs- Medienstrom 7 in dem gesamten Bereich des Wärmespeichers 15, 16 während des Durchströmens. Die Wärmespeicher 16 ,17 speichern die Wärme und geben die gespeicherte Wärme entsprechend mit einem Wechsel der Luftdurchströmungsrichtung durch die Verschluss- und Öffnungseinrichtungen 12 mit Durchqueren des gesamten Querschnitts des Wärmespeichers 15, 16 an die gegenläufige Luftdurchströmung des Belüftungs- Medienstrom 6 wieder ab.

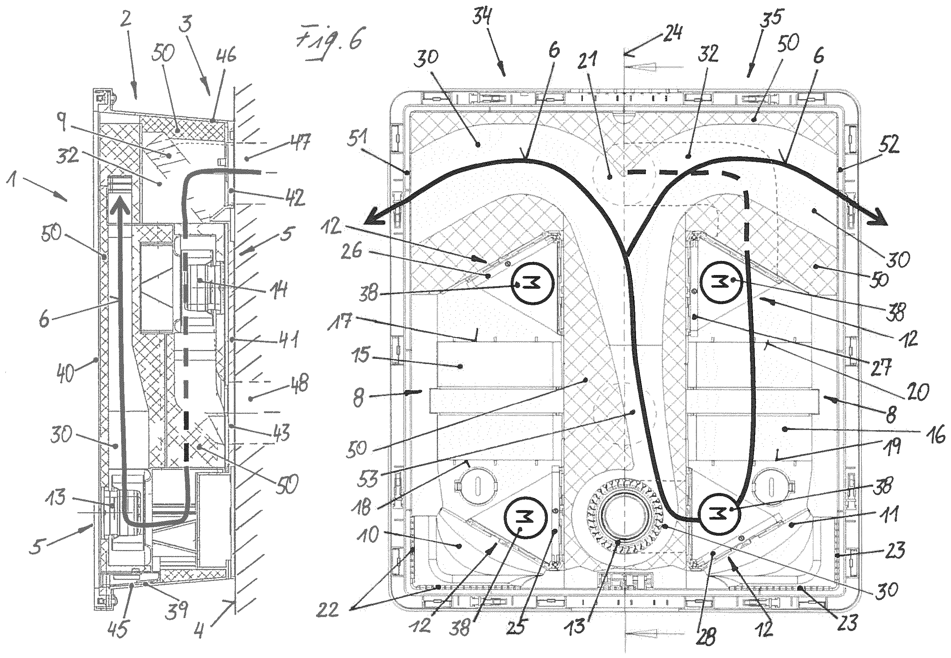

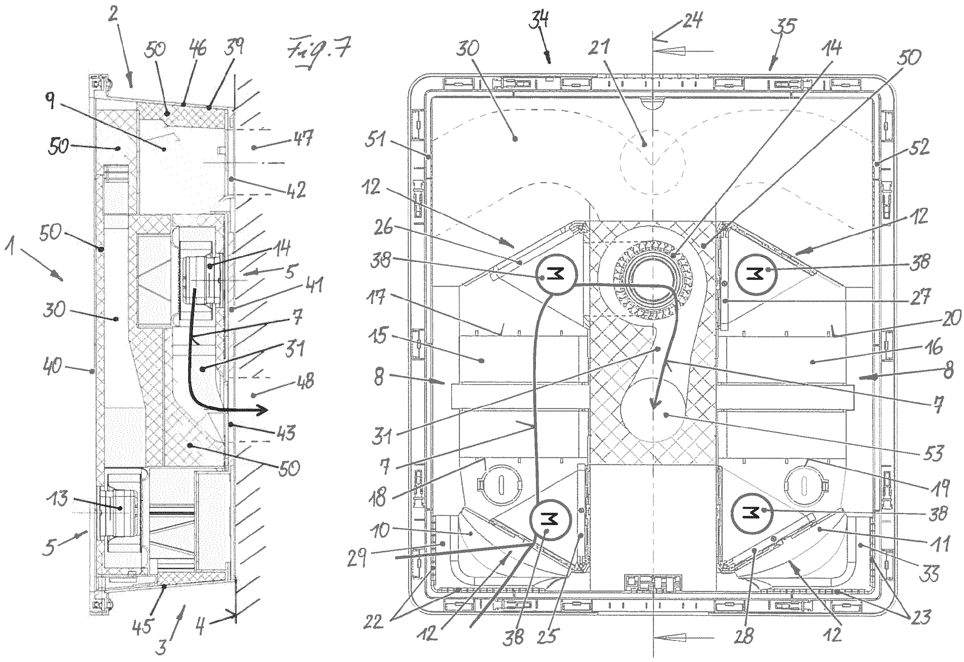

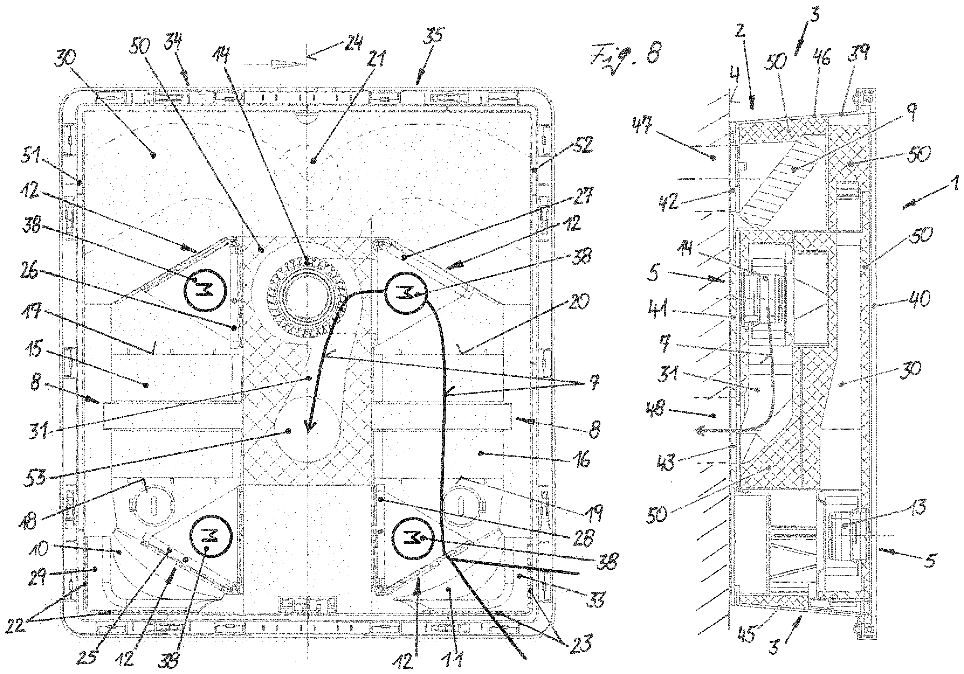

Die Wärmespeicher 15, 16 nehmen bei konstanter Luftdurchströmung, wie das die Ausgestaltung der Lüftungsvorrichtung 1 vorgibt, die Temperatur der Luft an. Wird beispielsweise nach Fig. 5 oder Fig. 6 von der Gebäudeaußenseite durch die Lufteintrittsöffnung 21der kühlere Belüftungs- Medienstrom 6 mit Pfeilrichtungsverlauf eingesogen, kühlt sich der Wärmespeicher 15, 16 ab. Mit anschließendem Ansaugen durch die Lufteintrittsöffnung 22, 23 des Entlüftungs- Medienstroms 7 mit Pfeilrichtungsverlauf nach Fig. 7 oder Fig. 8 von der Rauminnenseite 3 und Ausblasen nach draußen zur Gebäudeaußenseite durch die Luftaustrittsöffnung 53, kühlt der Wärmespeicher 15, 16 den Entlüftungs-Medienstrom 7 ab und erwärmt diesen jedoch gleichzeitig, wobei die erwärmte Luft des Belüftungs- Medienstroms 6 nach Pfeilrichtungsverlauf durch den Luftströmungskanal 30 hindurch und durch die Luftaustrittsöffnungen 51, 52 aus dem Gehäuse 2 heraus in die Rauminnenseite geblasen wird. Bei abermaliger Umkehr der Luftdurchströmungsrichtung wirkt der Wärmespeicher 15, 16 dann wie ein Wärmetauscher, erwärmt die eingesogene Luft des Belüftungs- Medienstroms 6 und kühlt sich dabei wieder selbst ab.

Der Wärmespeicher 15, 16 ist gegenläufig durchströmt und besteht aus einer keramischen oder metallischen Speichermasse und umfasst mehrere Kanäle. Die keramische oder metallische Speichermasse ist neben der hohen Wärmekapazität auch resistent gegen Keimbildung, da die Wärmespeicher 15, 16 der Lüftungsvorrichtung 1 durch die regelmäßigen und übergangslosen Intervalle des Be- und Entlüftungs- Medienstroms 6, 7 mögliche Feuchtigkeitsbildung durch Erwärmung trocknen. Die voran beschriebene Ausgestaltung der Lüftungsvorrichtung 1 mit den Wärmespeichern 15, 16 erreicht einen maximalen Volumenstrom von 70% und ein Wärmerückgewinnungsgrad größer 80%.

Aus der Seitenansicht der Fig. 5 und Fig. 6 ist das Filterelement 9 ersichtlich, welches von dem Belüftungs- Medienstrom 6 in einer gleichbleibenden Luftförderrichtung durchströmt wird. Das Filterelement 9 erstreckt sich dazu nahezu über die ganze Breite des Gehäuses 2 innerhalb des Luftströmungskanals 32. Die große Fläche des Filterelements 9 ermöglicht eine lange Nutzungsdauer aufgrund einer möglichen größeren Verteilung der eindringenden Schmutzpartikel. Zwei in dem Luftströmungskanal 29, 33 angeordnete Filterelemente 10, 11, gemäß der Vorderansicht der Fig. 7 oder Fig. 8, werden in einer gleichbleibenden Luftförderrichtung von dem Entlüftungs- Medienstrom 7 durchströmt. Dabei ist das Filterelement 9 den Einrichtungen zur Wärmerückgewinnung 15, 16 vorgeordnet, so dass in die Rauminnenseite 3 eingeführte Luft von schwebenden Schmutzpartikeln befreit ist. Ebenso sind die Filterelemente 10, 11 im Entlüftungs- Medienstrom 7 der Einrichtung der Wärmerückgewinnung 15, 16 vorgelagert. Das Filterelement bzw. die Filterelemente 10, 11 wirken einer Verschmutzung der Einrichtung der Wärmerückgewinnung 15, 16 auch der abgesaugten Luft von der Rauminnenseite 3 entgegen.

Außerdem sind die Filterelemente 9, 10, 11 im Gehäuse 2 an den jeweiligen Lufteintrittsöffnungen 21, 22, 23 des Be- und Entlüftungs- Medienstroms 6, 7 angeordnet. Dadurch wird erreicht, dass sowohl in den Filterelementen 9, 10, 11 als auch in den Wärmespeichern 15, 16 eine Strömung vorliegt, die deren vollflächige Luftdurchströmung gewährleistet. Die Anordnung der Filterelemente 9, 10, 11 begünstigt auch die größtmögliche Entfernung zu den Ventilatoren 13, 14, woraus neben den günstigen Luftdurchströmungsverhältnissen auch eine längere Verweilzeit der Luftdurchströmung mit der damit verbunden Erwärmung des zugeführten Belüftungs- Medienstroms 6 durch das gesamte Gehäuse 2 resultiert.

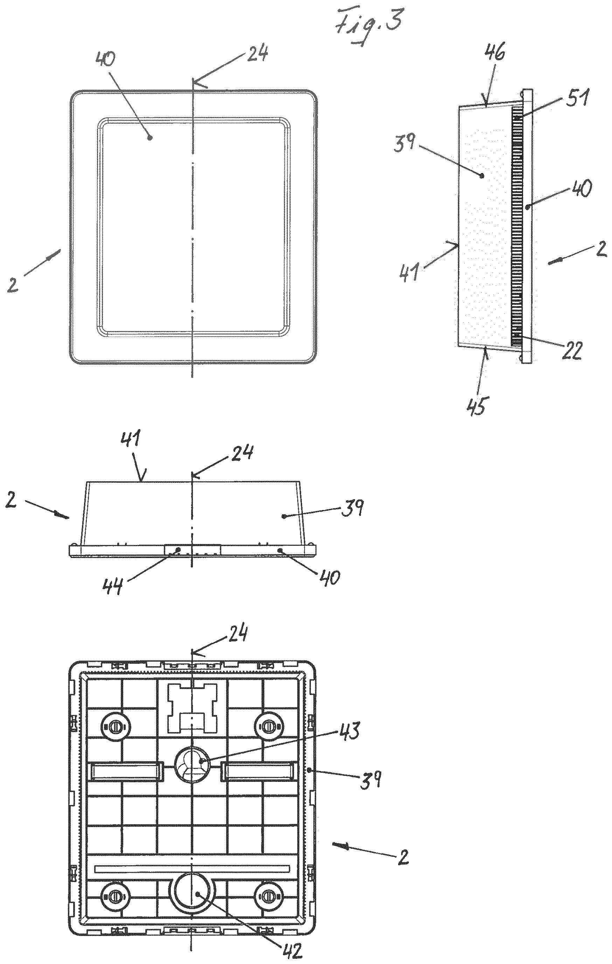

Zur einfachen Gestaltung und Verbindung bei der Montage, ist die Lüftungsvorrichtung 1 beispielweise nach Fig. 3 oder Fig. 5 bis Fig. 8 zur lotrechten Mittelebene 24 und in Richtung der Luftdurchströmung der Wärmespeicher 15, 16 spiegelbildlich ausgebildet. Durch die symmetrische Ausgestaltung werden nicht nur beidseitig gleiche Bauteile verwendet, sondern es ergeben sich durch die gleiche Anordnung der Bauteile auch die gleichen Luftströmungsverhältnisse bei gleicher Wärmerückgewinnung. Durch Schaltung der Verschluss- und Öffnungseinrichtung 12 befindet sich beispielsweise die erste Hälfte 34 mit dem angeordneten ersten Wärmespeicher 15 in dem Modus des Belüftungs- Medienstroms 6, wobei sich der zweite Wärmespeicher 16 auf der anderen angeordneten Hälfte 35 zur gleichen Zeit in dem Modus des Entlüftungs- Medienstroms 7 aufhält. Die Modi wechseln nach jedem Schaltvorgang der Verschluss- und Öffnungseinrichtung 12 von einer Hälfte 34 zur anderen Hälfte 35, sodass die angeordneten Wärmespeicher 15, 16 wechselseitig durchströmt werden.

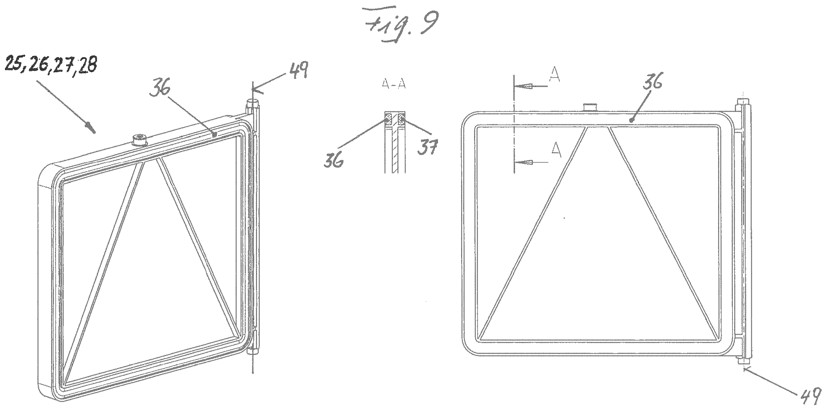

Zur Erreichung eines geräuschlosen und nahezu übergangslosen Umschalten von dem Belüftungs- Medienstrom 6 in den Entlüftungs- Medienstrom 7, weist die Verschluss- und Öffnungseinrichtung 12 ein Schließorgan auf, welches vorzugsweise von einer Lüftungsklappe 25, 26, 27, 28 in einer Einzelansicht nach Fig. 9 oder im Zusammenbau aktiven Betriebszustand nach Fig. 5 bis Fig. 8 und/ oder von einem nicht dargestellten Schieber gebildet ist.

Dabei ist die Verschluss- und Öffnungseinrichtung 12 so ausgebildet, dass die Lüftungsklappen 25, 26, 27, 28 mit einer Drehbewegung um eine Drehachse 49 nahezu spielfrei in einem Gehäuse der Verschluss- und Öffnungseinrichtung 12 gelagert aufgenommen sind, und zur Erzeugung einer fortlaufenden Luftführung entsprechend schnell schließend und/ oder entsprechend schnell öffnend arbeiten. Ein Kriterium dafür sind die Endlagewinkelstellungen der Lüftungsklappen 25, 26, 27, 28, die gleichzeitig den Verschluss- oder einen Öffnungszustand der Luftströmungskanäle 29, 30, 31, 32, 33 und damit den in den Fig. 5 bis Fig. 8 aufgezeigten Verlauf des Be- und Entlüftungs- Medienstroms 6, 7 bestimmen. Dazu sind die Lüftungsklappen 25, 26, 27, 28 in einem spitzen Winkel zumindest aber kleiner 90° voneinander beabstandet. Dadurch wird ein kurzer Drehweg bzw. Arbeitsweg um die Drehachse 49 der Lüftungsklappen 25, 26, 27, 28 bewerkstelligt.

Gemäß den Fig. 5 bis Fig. 8 findet die Verschluss- und Öffnungseinrichtung 12 in der Lüftungsvorrichtung 1 an vier Positionen ihren Einsatz. Als einzige Unterscheidung ist die Schaltstellung der aufweisenden Lüftungsklappen 25, 26, 27, 28 anzusehen, die während des Betriebszustandes im Uhrzeigersinn unterschiedliche Endlagewinkelstellungen aufweisen, wobei sich die in einem ersten Betriebszustand nach Fig. 5 auf der zur Mittelebene 24 geteilten einen Hälfte 34 der Lüftungsvorrichtung 1 angeordneten Lüftungsklappen 25, 26 in der Endlagestellung des geöffneten Belüftungs- Medienstroms 6 befinden und den einen Wärmespeicher 15 im Pfeilrichtungsverlauf durchströmen, während sich die auf der anderen Hälfte 35 der Lüftungsvorrichtung 1 angeordneten Lüftungsklappen 27, 28 nach Fig. 8 in der Endlagestellung des geöffneten Entlüftungs- Medienstroms 7 befinden und den anderen Wärmespeicher 16 im Pfeilrichtungsverlauf durchströmen. Mit Wechsel der Endlagestellungen der Lüftungsklappen 25, 26, 27, 28 stellt sich ein zweiter Betriebszustand ein, so dass die jeweiligen Wärmespeicher 15, 16 nach Fig. 6 und Fig. 7 von der Gegenrichtung nach den jeweiligen Pfeilrichtungsverläufen durchströmt werden, bei gleichzeitigem Richtungswechsel des Be- und Entlüftungs- Medienstroms 6, 7. Der ständige Richtungswechsel des Be- und Entlüftungs- Medienstroms 6, 7 auf jeder Hälfte 34, 35 der Lüftungsvorrichtung 1 durch die Steuerung der Verschluss- und Öffnungseinrichtung 12 über die Lüftungsklappen 25, 26, 27, 28, bewirkt bei konstantem Luftstrom ein kontinuierlichen Luftaustausch und eine konstante Wärmerückgewinnung.

Nach Fig. 9 ist zur Erhöhung des Dichtschlusses bei der Schließung der Luftströmungskanäle 29, 30, 31, 32, 33 des Belüftungs- Medienstroms 6 und des Entlüftungs- Medienstroms 7 an den Lüftungsklappen 25, 26, 27, 28 und/oder Schiebern eine Dichtung 36, 37 beidseitig umrandet vorgesehen. Selbst bei Kraftbeaufschlagung wirkt die Dichtung 36, 37 entlastend auf die Lüftungsklappen 25, 26, 27, 28 und/ oder den Schiebern und mindert den Verschleiß. Dabei handelt es sich vorzugsweise um eine, aus einem Schaum-/ Kautschuk- / oder Gummimaterial aufweisende Dichtungslippe, die mit dem Luftströmungskanal 29, 30, 31, 32, 33 nach Fig. 5 bis Fig. 8 im geschlossenen Zustand eine Wirkverbindung eingeht.

Zum Betätigen der Lüftungsklappen 25, 26, 27, 28 weist die Verschluss- und Öffnungseinrichtung 12 vorzugsweise einen elektromotorischen Antrieb 38 auf, der nach den Fig. 5 bis Fig. 8 angedeutet dargestellt ist. In vorteilhafter Weise lassen sich die Lüftungsklappen 25, 26, 27, 28 über den Antrieb 38 jeweils getrennt voneinander ansteuern, so dass der Betriebszustand der Lüftungsvorrichtung 1 zum Be- und Entlüften oder beispielweise zum kompletten Verschließen über ein Steuergerät 44 angewählt werden kann. Nach Draufsicht der Fig. 3 kann entnommen werden, dass oberhalb der Lüftungsvorrichtung 1 an der oberen Begrenzungswand 46 mittig zur Mittelebene 24, das Steuergerät 44 bzw. die Regelung der Lüftungsvorrichtung 1 notwendigen elektrischen Bauteile, sowie auch die Bedien- und Anzeigeinstrumente angeordnet sind, welche aber nicht dargestellt sind.

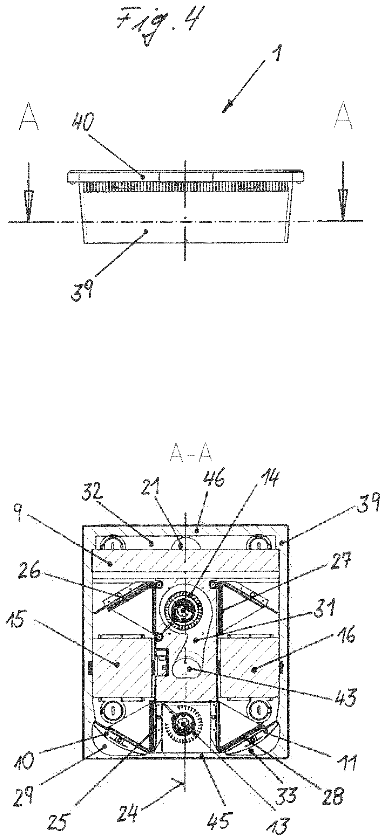

Als Luftfördereinrichtung 5 nach Fig. 4 bis Fig. 8 dargestellten Ventilatoren 13 ,14 werden Radialventilatoren eingesetzt, wobei jeweils ein Radialventilator axial mittig bzw. konzentrisch zu seinem Laufrad Luft ansaugt und die Luft dann radial von innen nach außen fördert. In der Lüftungsvorrichtung 1 arbeiten die Ventilatoren 13, 14 während des Betriebszustandes kontinuierlich, ohne eine Veränderung der Drehrichtung vorzunehmen. Der kontinuierliche Betrieb ohne Drehrichtungswechsel führt außerdem zu relativ niedrigen Betriebskosten und schont die Luftfördereinrichtung 5, so dass diese verschleißarm und nahezu geräuschlos arbeitet.

Ebenfalls nach den Fig. 4 bis Fig. 8 ist die Anordnung der Ventilatoren 13, 14 auf der lotrechten Mittelebene 24 der Lüftungsvorrichtung 1. An der lotrechten Mittelebene 24 orientiert sich zugleich die Anordnung der Ventilatoren 13, 14, wobei die Ventilatoren 13, 14 auf der Mittelebene versetzt zueinander angeordnet sind. Die versetzte Anordnung der Ventilatoren 13, 14 auf der Mittelebene 24 bietet Platz für eine einfache Montage und für ausreichend Dämmmaterial 50 zur Dämmung der Ventilatoren 13, 14 für ein niedriges Eigengeräusch und langer geführter Luftströmungskanäle 29, 30, 31, 32, 33 mit aerodynamischen Verlauf zur schallabsorbierenden Wirkung. Das Dämmmaterial 50 kleidet damit die Luftströmungskanäle 29, 30, 31, 32, 33 aus bzw. bildet die Luftströmungskanäle 29, 30, 31, 32, 33. Außerdem wird die Gehäuseschale 39 und der Gehäusedeckel 40 an der Innenseite zumindest teilweise mit dem Dämmmaterial 50 verkleidet. Durch die Dämmung wirkt sich die Lüftungsvorrichtung 1 akustisch - zur Vermeidung der Übertragung von Körperschall - , mechanisch und thermisch dämpfend aus.

Mit Beibehaltung des symmetrischen Aufbaus der Lüftungsvorrichtung 1 auf der Mittelebene 24 und durch die Anordnung des einen Ventilators 13 an der unteren Begrenzungswand 45 und des anderen Ventilators 14 an der oberen Begrenzungswand 46 des Gehäuses 2, ergibt sich jeweils eine größtmögliche Entfernung zu den Filterelementen 9, 10, 11 und zu den Wärmespeichern 15, 16. Daraus resultiert neben günstigen Luftdurchströmungsverhältnissen auch eine längere Verweilzeit der Luftdurchströmung mit der damit verbundenen besseren Erwärmung des zugeführten Belüftungs- Medienstroms 6 durch das ganze Gehäuse 2.

Wie aus den perspektivischen Darstellungen der Fig. 1 und Fig. 2 und den Ansichten der Fig. 3 hervorgeht, besteht das Gehäuse 2 der Lüftungsvorrichtung 1 aus einer Gehäuseschale 39 und einem Gehäusedeckel 40, welche form- und / oder kraftschlüssig miteinander verbindbar sind. Alle Funktionsbauteile lassen sich einfach und schnell im geöffneten Zustand des von der Gehäuseschale 39 entfernten Gehäusedeckels 40 in die Gehäuseschale 39 lagefixiert montieren und befestigen. Die integrierten Funktionsbauteile in der Gehäuseschale 39 sind mit Abdeckung des Gehäusedeckels 40 nach Fig. 3 völlig verdeckt angeordnet. Mögliche Verschmutzungen, die zu einer Beeinträchtigung der Lebensdauer der Lüftungsvorrichtung 1 beitragen können, werden durch die dichtende Verbindung der Gehäuseschale 39 mit dem Gehäusedeckel 40 ausgeschlossen. Vereinfacht lassen sich auch die Filterelemente 9, 10, 11 für eine mögliche Wartung mit Lösen einer form- und/ oder kraftschlüssigen Verbindung des Gehäusedeckels 40 ausbauen und gegebenenfalls reinigen.

Außerdem wird eine erhöhte Schalldämmung und eine Ausnutzung des vorhandenen Raumbedarfs der Lüftungsvorrichtung 1 für eine größtmögliche Auslastung der in dem Gehäuse 2 angeordneten Funktionsbauteile dadurch erreicht, dass die Gehäuseschale 39 nach der Unteransicht der Fig. 3 oder nach den Fig. 5 bis Fig. 8, an der zur Gebäudewand 4 anliegend die Gehäusewand 41 einen ersten Ausschnitt 42 für den Belüftungs- Medienstrom 6 und einen zweiten Ausschnitt 43 für den Entlüftungs- Medienstrom 7 aufweist.

Dazu besitzen die Ausschnitte 42, 43 angepasst an die Durchbrüche 47, 48 in der Gebäudewand 4 einen rohrförmigen Querschnitt, da sich die in der Gebäudewand 4 befindlichen Durchbrüche 47, 48 durch eine Bohrung vereinfacht herstellen lassen und eine Verbindung von der Gebäudeaußenseite zur Lüftungsvorrichtung 1 über jeweils andeutungsweise nach Fig. 5 bis Fig. 8 rohrförmige Lüftungskanäle auf einfache Weise ermöglichen. Begünstigt wird die Montage und die Herstellung der Durchbrüche 47, 48 dadurch, dass die Ausschnitte 42, 43 versetzt zueinander auf der lotrechten Mittelebene 24 der Lüftungsvorrichtung 1 angeordnet sind.

Zusammengefasst ergibt sich ein Verfahren zum Betrieb einer Lüftungsvorrichtung 1 zum Be- und Entlüften eines Raumes eines Gebäudes, bei dem im Be- und Entlüftungs-Medienstrom 6, 7 Ventilatoren 13, 14 und Wärmespeicher 15, 16 vorgesehen sind, wobei bei der durch eine wechselnde Durchströmung der Wärmespeicher 15, 16 ein Temperaturaustausch des Be- und Entlüftungs- Medienstroms 6, 7 erreicht wird, wobei die wechselnde Durchströmung der Wärmespeicher 15, 16 durch einen Tausch der Lüftungswege des Be- und Entlüftungs-Medienstroms 6, 7 unter Beibehaltung der Förderrichtung der Ventilatoren 13, 14 erreicht wird, wobei die Wärmespeicher saugseitig angeordnet zu den Ventilatoren im Betriebszustand kontinuierlich vollflächig an den jeweiligen Ein- und Austrittsöffnungen von dem Be- und /oder Entlüftungs-Medienstrom durchströmt werden.

### Bezugszeichenliste

- 1: Lüftungsvorrichtung
- 2: Gehäuse
- 3: Rauminnenseite
- 4: Gebäudewand
- 5: Luftfördereinrichtung
- 6: Belüftungs- Medienstrom
- 7: Entlüftungs- Medienstrom
- 8: Wärmespeichereinheit
- 9: Filterelement
- 10: Filterelement
- 11: Filterelement
- 12: Verschluss- und Öffnungseinrichtung
- 13: Ventilator
- 14: Ventilator
- 15: Wärmespeicher
- 16: Wärmespeicher
- 17: Eintrittsöffnung
- 18: Austrittsöffnung
- 19: Eintrittsöffnung
- 20: Austrittsöffnung
- 21: Lufteintrittsöffnung
- 22: Lufteintrittsöffnung
- 23: Lufteintrittsöffnung
- 24: Mittelebene
- 25: Lüftungsklappe
- 26: Lüftungsklappe
- 27: Lüftungsklappe
- 28: Lüftungsklappe
- 29: Luftströmungskanal
- 30: Luftströmungskanal
- 31: Luftströmungskanal
- 32: Luftströmungskanal
- 33: Luftströmungskanal
- 34: Hälfte
- 35: Hälfte
- 36: Dichtung
- 37: Dichtung
- 38: Antrieb
- 39: Gehäuseschale
- 40: Gehäusedeckel
- 41: Gehäusewand
- 42: Ausschnitt
- 43: Ausschnitt
- 44: Steuergerät
- 45: Begrenzungswand, unten
- 46: Begrenzungswand, oben
- 47: Durchbruch
- 48: Durchbruch
- 49: Drehachse
- 50: Dämmmaterial
- 51: Luftaustrittsöffnung
- 52: Luftaustrittsöffnung
- 53: Luftaustrittsöffnung

## Patentansprüche

1. Lüftungsvorrichtung (1) zum gleichzeitigen Be- und Entlüften von Räumen, mit einem an einer Rauminnenseite (3) oder in einer Gebäudewand (4) anordnenbaren Gehäuse (2), mit einer Luftfördereinrichtung (5) für einen von einer Gebäudeaußenseite in eine Rauminnenseite (3) hineinführenden Belüftungs- Medienstrom (6) und für einen aus einer Rauminnenseite (3) zur Gebäudeaußenseite herausführenden Entlüftungs- Medienstrom (7), mit einer Wärmespeichereinheit (8) zur Wärmeübertragung aus dem Entlüftungs- Medienstrom (7) auf den Belüftungs- Medienstrom (6), und mit einer Verschluss- und Öffnungseinrichtung (12) zur Steuerung der Luftströmungswege, wobei die Luftfördereinrichtung (5) aus einem Ventilator (13) für den Belüftungs- Medienstrom (6) und aus einem Ventilator (14) für den Entlüftungs- Medienstrom (7) besteht, wobei die Wärmespeichereinheit (8) zwei Wärmespeicher (15, 16) aufweist, welche im Betriebszustand vollflächig zum gleichzeitigen Be- und Entlüften der Rauminnenseite (3) an den jeweiligen Ein- und Austrittsöffnungen (17,18; 19, 20) von dem Be- und/ oder Entlüftungs- Medienstrom (6, 7) durchströmbar sind,
wobei die Ventilatoren (13, 14) für einen kontinuierlichen Betrieb in der Luftförderrichtung eingerichtet sind, und wobei den Wärmespeichern (15, 16) an den jeweiligen Ein- und Austrittsöffnungen (17, 18; 19, 20) des Be- und Entlüftungs- Medienstroms (6, 7) zum wechselseitigen und gegenläufigen Luftdurchströmen die Verschluss- und Öffnungseinrichtung (12) vorgeschaltet ist, wobei der erste Wärmespeicher (15) und der zweite Wärmespeicher (16) saugseitig zu den Ventilatoren (13, 14) angeordnet sind.

2. Lüftungsvorrichtung (1) nach Anspruch 1,
**dadurch gekennzeichnet,**
**dass** die Wärmespeicher (15, 16) aus einer keramischen oder metallischen Speichermasse bestehen.

3. Lüftungsvorrichtung (1) nach Anspruch 1,
**dadurch gekennzeichnet,**
**dass** in beiden Luftströmungswegen des Be- und Entlüftungs- Medienstroms (6, 7) Filterelemente (9, 10, 11) vorgesehen sind,
wobei zumindest ein Filterelement (9) von dem Belüftungs- Medienstrom (6) und mindestens ein vorzugsweise zwei Filterelemente (10, 11) von dem Entlüftungs-Medienstrom (7), in einer gleichbleibenden Luftförderrichtung durchströmt werden.

4. Lüftungsvorrichtung (1) nach Anspruch 1,
**dadurch gekennzeichnet,**
**dass** die Filterelemente (9, 10, 11) im Gehäuse (2) an den jeweiligen Lufteintrittsöffnungen (21, 22, 23) des Be- und Entlüftungs- Medienstroms (6, 7) angeordnet sind.

5. Lüftungsvorrichtung (1) nach Anspruch 1,
**dadurch gekennzeichnet,**
**dass** die Lüftungsvorrichtung (1) zur lotrechten Mittelebene (24) und in Richtung der Luftdurchströmung der Wärmespeicher (15, 16) spiegelbildlich ausgebildet eine symmetrische Ausgestaltung mit beidseitig gleichen Bauteilen bei gleichen Luftströmverhältnissen und gleicher Wärmerückgewinnung ergibt.

6. Lüftungsvorrichtung (1) nach Anspruch 1,
**dadurch gekennzeichnet,**
**dass** die Verschluss- und Öffnungseinrichtung (12) ein Schließorgan aufweist, welches vorzugsweise von einer Lüftungsklappe (25, 26, 27, 28) und/ oder von einem Schieber gebildet ist, zum Öffnen und Schließen von Luftströmungskanälen (29, 30, 31, 32, 33) für den Be- und Entlüftungs- Medienstrom (6, 7).

7. Lüftungsvorrichtung (1) nach Anspruch 6,
**dadurch gekennzeichnet,**
**dass** die Verschluss- und Öffnungseinrichtung (12) zur Erzeugung einer kontinuierlichen Luftführung über die Lüftungsklappen (25, 26, 27, 28) schnell schließend und/ oder schnell öffnend arbeitend ausgebildet sind.

8. Lüftungsvorrichtung (1) nach Anspruch 1,
**dadurch gekennzeichnet,**
**dass** sich die in einem ersten Betriebszustand auf der zur Mittelebene (24) geteilten einen Hälfte (34) der Lüftungsvorrichtung (1) angeordneten Lüftungsklappen (25, 26) in der Endlagestellung des geöffneten Belüftungs- Medienstroms (6) befinden und den einen Wärmespeicher (15) durchströmen und die auf der anderen Hälfte (35) der Lüftungsvorrichtung (1) angeordneten Lüftungsklappen (27, 28) in der Endlagestellung des geöffneten Entlüftungs- Medienstroms (7) befinden und den anderen Wärmespeicher (16) durchströmen, wobei sich mit einem Wechsel der Endlagestellungen der Lüftungsklappen (25, 26, 27, 28) ein zweiter Betriebszustand einstellt, so dass die jeweiligen Wärmespeicher (15, 16) von der Gegenrichtung durchströmt werden, bei gleichzeitigem Richtungswechsel des Be- und Entlüftungs-Medienstroms (6, 7).

9. Lüftungsvorrichtung (1) nach Anspruch 6,
**dadurch gekennzeichnet,**
**dass** die Lüftungsklappen (25, 26, 27, 28) und/ oder die Schieber zum Verschließen der Luftströmungskanäle (29, 30, 31, 32, 33) des Belüftungs- Medienstroms (6) und des Entlüftungs- Medienstroms (7) eine Dichtung (36, 37) aufweisen, die vorzugsweise an den Lüftungsklappen (25, 26, 27, 28) umrandet und beidseitig angeordnet beispielsweise aus einer Gummi-/ Kautschukmaterial bestehen.

10. Lüftungsvorrichtung (1) nach Anspruch 1,
**dadurch gekennzeichnet,**
**dass** die Verschluss- und Öffnungseinrichtungen (12) zum Betätigen der Lüftungsklappen (25, 26, 27, 28) einen elektromotorischen Antrieb (38) aufweisen.

11. Lüftungsvorrichtung (1) nach Anspruch 1,
**dadurch gekennzeichnet,**
**dass** die während des Betriebszustandes kontinuierlich arbeitenden Ventilatoren (13, 14) der Luftfördereinrichtung (5) Radialventilatoren sind, wobei die Ventilatoren (13, 14) versetzt zueinander auf der Mittelebene (24) der Lüftungsvorrichtung (1) angeordnet sind.

12. Lüftungsvorrichtung (1) nach Anspruch 1,
**dadurch gekennzeichnet,**
**dass** das Gehäuse (2) der Lüftungsvorrichtung (1) aus einer Gehäuseschale (39) und einem Gehäusedeckel (40) besteht, welche form- und / oder kraftschlüssig miteinander verbindbar sind.

13. Lüftungsvorrichtung (1) nach Anspruch 1 und 12,
**dadurch gekennzeichnet,**
**dass** die Gehäuseschale (39) an der zur Gebäudewand (4) anliegenden Gehäusewand (41) einen ersten Ausschnitt (42) für den Belüftungs- Medienstrom (6) und einen zweiten Ausschnitt (43) für den Entlüftungs- Medienstrom (7) aufweist.

14. Lüftungsvorrichtung (1) nach Anspruch 12,
**dadurch gekennzeichnet,**
**dass** die Ausschnitte (42, 43) rohrförmig ausgebildet sind und versetzt zueinander auf der lotrechten Mittelebene (24) der Lüftungsvorrichtung (1) angeordnet sind.

15. Verfahren zum Betrieb einer Lüftungsvorrichtung (1) zum Be- und Entlüften eines Raumes eines Gebäudes, bei dem im Be- und Entlüftungs- Medienstrom (6, 7) Ventilatoren (13, 14) und Wärmespeicher (15, 16) vorgesehen sind,
wobei bei der durch eine wechselnde Durchströmung der Wärmespeicher (15, 16) ein Temperaturaustausch des Be- und Entlüftungs- Medienstroms (6, 7) erreicht wird,
wobei die wechselnde Durchströmung der Wärmespeicher (15, 16) durch einen Tausch der Lüftungswege des Be- und Entlüftungs- Medienstroms (6, 7) unter Beibehaltung der Förderrichtung der Ventilatoren (13, 14) erreicht wird,
wobei die Wärmespeicher (15, 16) saugseitig zu den Ventilatoren (13, 14) angeordnet im Betriebszustand kontinuierlich vollflächig an den jeweiligen Ein- und Austrittsöffnungen (17, 18, 19, 20) von dem Be- und/oder Entlüftungs-Medienstrom (6, 7) durchströmt werden.

## Claims

1. Aventilating device (1) for the simultaneous aeration and venting of rooms, comprising a housing (2) that can be arranged on the inside (3) of a room or in a building wall (4), comprising an air conveying device (5) for an aeration medium flow (6) leading from the outside of a building into the inside (3) of a room for a venting medium flow (7) leading from the inside (3) of a room to the outside of the building, comprising a heat storage unit (8) for heat transfer from the venting medium flow (7) to the aeration medium flow (6), and comprising a closing and opening device (12) for controlling the air flow paths, the air conveying device (5) consisting of a fan (13) for the aeration medium flow (6) and of a fan (14) for the venting medium flow (7), the heat storage unit (8) having two heat accumulators (15, 16), through which, in the operating state, the aeration and/or venting medium flow (6, 7) are able to flow over the entire surface for simultaneous aeration and venting of the inside (3) of the room at the respective inlet and outlet openings (17,18; 19, 20), the fans (13, 14) being set up for continuous operation in the air conveying direction, the closing and opening device (12) being connected upstream of the heat accumulators (15, 16) at the respective inlet and outlet openings (17, 18; 19, 20) of the aeration and venting medium flow (6, 7) for alternating and counter-rotating air flows, the first heat accumulator (15) and the second heat accumulator (16) being arranged on the suction side of the fans (13, 14).

2. The ventilating device (1) according to claim 1,
**characterized in that**
the heat accumulators (15, 16) consist of a ceramic or metallic storage mass.

3. The ventilating device (1) according to claim 1,
**characterized in that**
filter elements (9, 10, 11) are provided in both air flow paths of the aeration and venting medium flow (6, 7), wherein the aeration medium flow (6) flows through at least one filter element (9) and the venting medium flow (7) flows through at least one, preferably two, filter elements (10, 11) in a constant air conveying direction.

4. The ventilating device (1) according to claim 1,
**characterized in that**
the filter elements (9, 10, 11) are arranged in the housing (2) at the respective air inlet openings (21, 22, 23) of the aeration and venting medium flow (6, 7).

5. The vetilating device (1) according to claim 1,
**characterized in that,**
the ventilating device (1) is designed mirror-inverted to the vertical center plane (24) and in the direction of the air flow through the heat accumulators (15, 16), resulting in a symmetrical design with the same components on both sides with the same air flow conditions and the same heat recovery.

6. The ventilating device (1) according to claim 1,
**characterized in that**
the closing and opening device (12) has a closing element, which is preferably formed by a ventilation flap (25, 26, 27, 28) and/or by a slider, for opening and closing air flow channels (29, 30, 31, 32, 33) for the aeration and venting medium flow (6, 7).

7. The ventilating device (1) according to claim 6,
**characterized in that**
the closing and opening device (12) for generating a continuous flow of air via the ventilation flaps (25, 26, 27, 28) are designed to close and/or open quickly.

8. The ventilating device (1) according to claim 1,
**characterized in that**
in a first operating state, the ventilation flaps (25, 26) arranged on the one half (34) of the ventilating device (1) divided towards the central plane (24) are in the end position of the open aeration medium flow (6) and flow through the one heat accumulator (15) and the ventilation flaps (27, 28) arranged on the other half (35) of the ventilating device (1) are in the end position of the open venting medium flow (7) and flow through the other heat accumulator (16), wherein a second operating state is set with a change in the end positions of the ventilation flaps (25, 26, 27, 28), so that the respective heat accumulators (15, 16) are flowed through from the opposite direction, with simultaneous change of direction of the aeration and venting medium flow (6, 7).

9. The ventilating device (1) according to claim 6,
**characterized in that,**
the ventilation flaps (25, 26, 27, 28) and/or the sliders for closing the air flow channels (29, 30, 31, 32, 33) of the aeration medium flow (6) and the venting medium flow (7) have a seal (36, 37), which are preferably bordered on the ventilation flaps (25, 26, 27, 28) and arranged on both sides and consist of a rubber material, for example.

10. The ventilating device (1) according to claim 1,
**characterized in that**
the closing and opening devices (12) for actuating the ventilation flaps (25, 26, 27, 28) have an electric motor drive (38).

11. The ventilating device (1) according to claim 1,
**characterized in that**
the fans (13, 14) of the air conveying device (5), which operate continuously during the operating state, are radial fans, wherein the fans (13, 14) are arranged offset from one another on the central plane (24) of the ventilating device (1).

12. The ventilating device (1) according to claim 1,
**characterized in that**
the housing (2) of the ventilating device (1) consists of a housing shell (39) and a housing cover (40) which can be connected to one another in a positive and/or non-positive manner.

13. The ventilating device (1) according to claims 1 and 12,
**characterized in that**
the housing shell (39) on the housing wall (41) adjacent to the building wall (4) has a first cutout (42) for the aeration medium flow (6) and a second cutout (43) for the venting medium flow (7).

14. The ventilating device (1) according to claim 12,
**characterized in that**
the cutouts (42, 43) are designed tubular and are arranged offset from one another on the vertical central plane (24) of the ventilating device (1).

15. A method for operating a ventilating device (1) for aerating and venting a room in a building, in which fans (13, 14) and heat accumulators (15, 16) are provided in the aeration and venting medium flow (6, 7), temperature exchange of the aeration and venting medium flow (6, 7) being achieved by an alternating flow through the heat accumulators (15, 16), the alternating flow through the heat accumulators (15, 16) being achieved by a exchange of the ventilation paths of the aeration and venting medium flow (6, 7) while maintaining the conveying direction of the fans (13, 14),the aeration and/or venting medium flow (6, 7) continuously flowing through the heat accumulators (15, 16) arranged on the suction side of the fans (13, 14) in the operating state over the entire surface at the respective inlet and outlet openings (17, 18, 19, 20).

## Revendications

1. Dispositif de ventilation (1) pour l'aération et la ventilation simultanées de locaux, avec un boîtier (2) pouvant être disposé à l'intérieur (3) d'un local ou dans un mur de bâtiment (4), muni d'un dispositif de transport d'air (5) pour déplacer l'air de l'extérieur d'un bâtiment vers l'intérieur d'un local (3), amenant un flux de fluide de ventilation (6) pour un flux de fluide de ventilation (7) sortant d'un coté intérieur du local (3) vers l'extérieur du bâtiment, muni d'une unité de stockage de chaleur (8) pour le transfert de chaleur du flux de fluide de ventilation (7) au flux de fluide de ventilation (6), et muni d'un dispositif de fermeture et d'ouverture (12) pour gérer les trajets du flux d'air, le dispositif de transport d'air (5) étant composé d'un ventilateur (13) pour le flux de fluide de ventilation (6) et d'un ventilateur (14) pour le flux de fluide de ventilation (7), dans lequel l'unité de stockage de chaleur (8) comporte deux accumulateurs de chaleur (15, 16) qui peuvent être traversés à l'état de fonctionnement, sur toute la surface, pour la ventilation simultanée du local à l'intérieur (3) sur les ouvertures d'entrée et de sortie appropriées respectives (17,18 ; 19, 20) de la ventilation et/ou du courant de fluide de ventilation (6, 7), les ventilateurs (13, 14) étant configurés pour un fonctionnement continu dans la direction de transport d'air, les accumulateurs de chaleur (15, 16) étant montés en amont au niveau des ouvertures d'entrée et de sortie respectives (17, 18 ; 19, 20) du flux de fluide de ventilation (6, 7), pour un flux d'air alternatif et en sens contraire à travers le dispositif de fermeture et d'ouverture (12), si bien que le deuxième accumulateur de chaleur (16) est disposé du côté aspiration des ventilateurs (13, 14).

2. Dispositif de ventilation (1) selon la revendication 1,
**caractérisé en ce que**
les accumulateurs de chaleur respectifs (15, 16) sont une masse de stockage fabriquée en céramique, en métal ou en plastique.

3. Dispositif de ventilation (1) selon la revendication 1,
**caractérisé en ce que**
des éléments filtrants (9, 10, 11) sont prévus dans les deux voies d'écoulement d'air du flux de fluide d'aération (6, 7),
le flux de fluide de ventilation (6) traversant au moins un élément filtrant (9) et le flux de fluide de ventilation (7) traversant au moins un, de préférence deux, éléments filtrants (10, 11) dans une direction de transport d'air qui reste constante.

4. Dispositif de ventilation (1) selon la revendication 1,
**caractérisé en ce que**
les éléments filtrants (9, 10, 11) sont disposés dans le boîtier (2) au niveau des ouvertures d'entrée d'air respectives (21, 22, 23) du flux de fluide de ventilation (6, 7).

5. Dispositif de ventilation (1) selon la revendication 1,
**caractérisé en ce que**
le dispositif de ventilation (1) est inversé par rapport au plan médian vertical (24) et dans le sens du flux d'air à travers les accumulateurs de chaleur (15, 16) et aboutit à une conception symétrique avec les mêmes composants des deux côtés avec les mêmes conditions de débit d'air et la même récupération de chaleur.

6. Dispositif de ventilation (1) selon la revendication 1,
**caractérisé en ce que**
le dispositif de fermeture et d'ouverture (12) comporte un élément de fermeture qui est formé de préférence par un volet de ventilation (25, 26, 27, 28) et/ou par un coulisseau, pour ouvrir et fermer des canaux d'écoulement d'air (29, 30, 31, 32, 33) pour le flux de fluide de ventilation (6, 7).

7. Dispositif de ventilation (1) selon la revendication 6,
**caractérisé en ce que**
le dispositif de fermeture et d'ouverture (12) est conçu pour fonctionner en se fermant et/ou en s'ouvrant rapidement pour générer un flux d'air continu via les volets de ventilation (25, 26, 27, 28).

8. Dispositif de ventilation (1) selon la revendication 1,
**caractérisé en ce que**
dans un premier état de fonctionnement, les volets d'aération (25, 26) disposés sur la moitié (34) du dispositif d'aération (1) divisé vers le plan médian (24) se trouvent dans la position finale du flux de fluide d'aération ouvert (6 ) et traversent l'un des accumulateurs de chaleur (15) et les volets d'aération (27, 28) disposés sur l'autre moitié (35) du dispositif d'aération (1) se trouvent dans la position finale du flux de fluide d'aération ouvert (7) et s'écoulent à travers l'autre accumulateur de chaleur (16), avec un changement des positions finales des volets d'aération (25, 26, 27, 28), un deuxième état de fonctionnement est réglé, de sorte que les accumulateurs de chaleur respectifs (15, 16) sont traversé en sens inverse, avec un changement de sens simultané du flux de fluide de ventilation (6, 7).

9. Dispositif de ventilation (1) selon la revendication 6,
**caractérisé en ce que**
les volets d'aération (25, 26, 27, 28) et/ou les volets servant à fermer les canaux de flux d'air (29, 30, 31, 32, 33) du flux de fluide de ventilation (6) et du flux de fluide de ventilation (7) comportent un joint (36, 37) qui borde de préférence les volets d'aération (25, 26, 27, 28), qui est disposé des deux côtés et qui est fabriqué par exemple en un matériau en caoutchouc.

10. Dispositif de ventilation (1) selon la revendication 1,
**caractérisé en ce que**
les dispositifs de fermeture et d'ouverture (12) chargés d'actionner les volets d'aération (25, 26, 27, 28) comportent un entraînement par moteur électrique (38).

11. Dispositif de ventilation (1) selon la revendication 1,
**caractérisé en ce que**
les ventilateurs (13, 14) du dispositif de transport d'air (5), qui fonctionnent en permanence à l'état de fonctionnement, sont des ventilateurs radiaux, ces ventilateurs (13, 14) étant décalés les uns des autres sur le plan médian (24) du dispositif d'aération (1).

12. Dispositif de ventilation (1) selon la revendication 1,
**caractérisé en ce que**
le boîtier (2) du dispositif d'aération (1) se compose d'une coque de boîtier (39) et d'un couvercle de boîtier (40) qui peuvent être reliés l'un à l'autre de manière positive et/ou par friction.

13. Dispositif de ventilation (1) selon les revendications 1 et 12,
**caractérisé en ce que**
**en ce que** la coque de boîtier (39) sur la paroi de boîtier (41) adjacente au mur de bâtiment (4) présente une première découpe (42) pour le flux de fluide de ventilation (6) et une deuxième découpe (43) pour le flux de fluide de ventilation (7).

14. Dispositif de ventilation (1) selon la revendication 12,
**caractérisé en ce que**
les découpes (42, 43) sont de forme tubulaire et sont décalées l'une de l'autre sur le plan médian vertical (24) du dispositif de ventilation (1).

15. Procédé de fonctionnement d'un dispositif de ventilation (1) pour ventiler et aérer un local dans un bâtiment, dans lequel des ventilateurs (13, 14) et des accumulateurs de chaleur (15, 16) sont prévus dans la ventilation et le flux de fluide de ventilation (6, 7),
un échange de température du courant de fluide d'aération et de ventilation (6, 7) étant réalisé par un courant alternatif qui traverse les accumulateurs de chaleur (15, 16), par lequel, le flux alternatif à travers l'accumulateur de chaleur (15, 16) est obtenu en échangeant les trajets de ventilation du flux de fluide d'aération et de ventilation (6, 7) tout en maintenant la direction de transport des ventilateurs (13, 14),
dans lequel les accumulateurs de chaleur (15, 16) sont disposés sur le côté aspiration des ventilateurs (13, 14) à l'état de fonctionnement de manière continue sur toute la surface au niveau des ouvertures d'entrée et de sortie respectives (17, 18, 19, 20) et traversés par le flux de fluide d'aération et/ou de ventilation (6, 7) .
